# FASCICULE DE BREVET EUROPEEN

(11) **EP 3 499 316 B1**
(45) Date de publication et mention de la délivrance du brevet: **07.08.2024**
(21) Numéro de dépôt: 17207752.1
(22) Date de dépôt: 15.12.2017
(51) Int. Cl.: G04B 1/14, G04D 3/00, F16F 1/10, F16F 1/12

(54) **RESSORT DE BARILLET POUR UN MOUVEMENT HORLOGER D'UNE PIÈCE D'HORLOGERIE ET PROCÉDÉ DE FABRICATION D'UN TEL RESSORT**
SCHLIESSZYLINDERFEDER FÜR EIN UHRWERK EINER UHR, UND HERSTELLUNGSVERFAHREN EINER SOLCHEN FEDER
BARREL SPRING FOR A CLOCK MOVEMENT OF A TIMEPIECE AND METHOD FOR MANUFACTURING SUCH A SPRING

(43) Date de publication de la demande: 19.06.2019
(73) Titulaire: Nivarox-FAR S.A., 2400 Le Locle (CH)
(72) Inventeur: VANNOD, Jonas, 2503 Bienne (CH); CHABRON, Christian, 2054 Chézard-St-Martin (CH)
(74) Mandataire: ICB SA

(56) Documents cités:
- EP-A1- 2 520 821
- CH-A2- 704 237
- CH-A2- 706 653

## Description

### Domaine de l'invention

L'invention porte sur un procédé de fabrication d'un ressort de barillet pour un mouvement horloger d'une pièce d'horlogerie ainsi que sur ce ressort de barillet.

L'invention porte également sur ce mouvement horloger pourvu d'un tel ressort de barillet et aussi sur la pièce d'horlogerie comprenant un tel mouvement horloger.

### Arrière-plan de l'invention

Dans l'état de la technique, les procédés de fabrication d'un ressort de barillet pour un mouvement horloger d'une pièce d'horlogerie comprennent classiquement une étape initiale de formation d'une lame métallique comportant une sous-étape d'obtention d'un fil métallique par tréfilage et une sous-étape de laminage du fil obtenu. De tels procédés prévoient généralement ensuite une étape distincte de réalisation d'une ouverture rectangulaire (dite « fenêtre ») dans une extrémité interne de cette lame, laquelle ouverture étant prévue pour coopérer avec un crochet d'une partie cylindrique médiane que l'on appelle "bonde" d'un arbre de barillet du mouvement. Ces procédés comportent par la suite une étape de réalisation d'un coquillon permettant de faire un premier tour de cet arbre de barillet dans l'optique d'assurer le montage du ressort sur ce dernier.

On connait également dans l'état de la technique des ressorts de barillet décrits dans les documents CH704237A2 et CH706653A2 comprenant classiquement des viroles ou des oeillets participant à leur montage sur des axes de barillet.

Toutefois, de tels procédés ne permettent la fabrication de ressorts de barillet que dans un nombre limité de matériaux. En effet, ces procédés ne sont pas adaptés par exemple à la fabrication de ressorts de barillet formés à partir de matériaux électrodéposés. Il existe donc un besoin de développer des procédés de fabrication de tels ressorts de barillet ne présentant pas de tels inconvénients.

### Résumé de l'invention

Le but de la présente invention est de pallier en tout ou partie les inconvénients cités précédemment en proposant un procédé de fabrication d'un ressort de barillet pourvu d'une zone d'accrochage originale contribuant à la formation d'une telle pièce en trois dimensions présentant une complexité de fabrication du fait notamment de ses petites dimensions et/ou de sa forme particulière et ce, à partir d'une grande diversité de matériaux.

Dans ce dessein, l'invention porte sur un procédé de fabrication d'un ressort de barillet pour un mouvement horloger d'une pièce d'horlogerie, ledit ressort de barillet comprenant une extrémité interne comportant une première spire interne ou un noyau fixe définissant une zone d'accrochage à une zone de liaison définie sur une bonde de l'arbre de barillet, ce ressort de barillet comprenant une lame métallique spiralée, le procédé comprenant une étape de réalisation d'une lame métallique spiralée et de ladite zone d'accrochage sur une face intérieure de l'extrémité interne de ladite lame, la zone d'accrochage comprenant au moins un profil et au moins une cavité compris dans ladite face intérieure de cette extrémité interne, ladite au moins une cavité comprenant un fond et des parois latérales, lesdites parois latérales formant chacune avec ledit fond un angle aigu et ladite au moins une cavité présentant une profondeur qui est sensiblement supérieure ou strictement supérieure à une moitié de l'épaisseur de la lame, ladite au moins une cavité ayant une forme complémentaire à celle dudit au moins un profil de la zone de liaison de l'arbre de barillet et coopérant avec ledit au moins un profil de cette zone de liaison, et ledit au moins un profil étant une surépaisseur qui est comprise sur la face intérieure de l'extrémité interne de la lame, ledit au moins un profil ayant une forme complémentaire à celle de ladite au moins une cavité de la zone de liaison de l'arbre de barillet du mouvement horloger et coopérant avec ladite au moins une cavité de cette zone de liaison, ladite étape de réalisation comprenant :
- une sous-étape de formation de la lame métallique spiralée et de la zone d'accrochage par électroformage, ou
- une sous-étape de formation de la lame métallique spiralée et de la zone d'accrochage par évidemment dans un substrat métallique en forme de plaque, ou
- une sous-étape de formation de la lame métallique spiralée et de la zone d'accrochage par une technique de fabrication additive métallique.
Dans d'autres modes de réalisation :
- ladite sous-étape de formation comprend :
   - une phase de création par photolithographie d'un moule comprenant au moins un niveau sur un substrat ;
   - une phase de remplissage dudit au moins un niveau du moule par électrodéposition d'un matériau métallique, et
   - une phase de libération de la lame du moule comprenant la zone d'accrochage et du substrat afin de former le ressort de barillet ;
- l'évidement est réalisé à partir de techniques de photolithographie et/ou de gravure/découpage par attaque chimique et/ou de découpage par laser et/ou de gravure DRIE ;

L'invention porte aussi sur un ressort de barillet pour un mouvement horloger d'une pièce d'horlogerie susceptible d'être obtenu à partir de ce procédé, ledit ressort de comprenant une extrémité interne comportant une première spire interne ou un noyau fixe définissant une zone d'accrochage à une zone de liaison définie sur une bonde de l'arbre de barillet, ce ressort de barillet comprenant une lame métallique spiralée et ladite zone d'accrochage définie dans une face intérieure de l'extrémité interne de ladite lame, la zone d'accrochage comportant au moins un profil et au moins une cavité compris dans ladite face intérieure de cette extrémité interne, ladite au moins une cavité comprenant un fond et des parois latérales, lesdites parois latérales formant chacune avec ledit fond un angle aigu et ladite au moins une cavité présentant une profondeur qui est sensiblement supérieure ou strictement supérieure à une moitié de l'épaisseur de la lame, ladite au moins une cavité ayant une forme complémentaire à celle dudit au moins un profil de la zone de liaison de l'arbre de barillet et coopérant avec ledit au moins un profil de cette zone de liaison, et ledit au moins un profil étant une surépaisseur qui est comprise sur la face intérieure de l'extrémité interne de la lame, ledit au moins un profil ayant une forme complémentaire à celle de ladite au moins une cavité de la zone de liaison de l'arbre de barillet du mouvement horloger et coopérant avec ladite au moins une cavité de cette zone de liaison.

L'invention porte également sur un mouvement horloger d'une pièce d'horlogerie comportant un tel ressort de barillet

Avantageusement, le mouvement horloger comprend un arbre de barillet pourvu d'une paroi périphérique comportant la zone de liaison comprenant ledit au moins un profil et ladite au moins une cavité susceptible de coopérer respectivement avec ladite au moins une cavité et/ou ledit au moins un profil de la zone d'accrochage du ressort de barillet contribuant au maintien de ce ressort de barillet sur cet arbre de barillet.

L'invention porte aussi sur une pièce d'horlogerie comprenant un tel mouvement horloger.

Ainsi grâce à ces caractéristiques, le procédé de fabrication permet de réaliser des ressorts de barillet dans une grande diversité de matériaux et en particulier dans des matériaux qui ne peuvent subir des opérations de laminage et/ou d'étampage notamment dans le cadre de la formation de la zone d'accrochage de ces ressorts qui requiert une très grande précision dans sa réalisation du fait notamment de ses petites dimensions et/ou de sa forme particulière.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation schématique d'un ressort de barillet pour un mouvement horloger d'une pièce d'horlogerie selon un premier mode de réalisation de l'invention ;
- la figure 2 est une représentation schématique d'une extrémité interne du ressort de barillet comprenant une première spire interne pourvue d'une zone d'accrochage comportant une cavité selon le premier mode de réalisation de l'invention ;
- la figure 3 est une représentation schématique d'une extrémité interne du ressort de barillet comprenant un noyau fixe pourvu d'une zone d'accrochage comportant une cavité selon un deuxième mode de réalisation de l'invention ;
- la figure 4 est une représentation schématique d'un ressort de barillet pour un mouvement horloger d'une pièce d'horlogerie selon un troisième mode de réalisation de l'invention ;
- la figure 5 est une représentation schématique d'une extrémité interne du ressort de barillet comprenant une première spire interne pourvue d'une zone d'accrochage comportant un profil selon le troisième mode de réalisation de l'invention ;
- la figure 6 est une représentation schématique d'une extrémité interne du ressort de barillet comprenant un noyau fixe pourvu d'une zone d'accrochage comportant un profil selon un quatrième mode de réalisation de l'invention ;
- la figure 7 est une représentation schématique d'une extrémité interne du ressort de barillet comprenant un noyau fixe pourvu d'une zone d'accrochage comportant une cavité et un profil selon un cinquième mode de réalisation de l'invention ;
- la figure 8 est un logigramme relatif à un procédé de fabrication du ressort de barillet, et
- la figure 9 est une représentation schématique d'une pièce d'horlogerie comprenant le mouvement horloger pourvu de l'un des premier au cinquième modes de réalisation du ressort de barillet coopérant avec un arbre de barillet.

### Description détaillée des modes de réalisation préférés

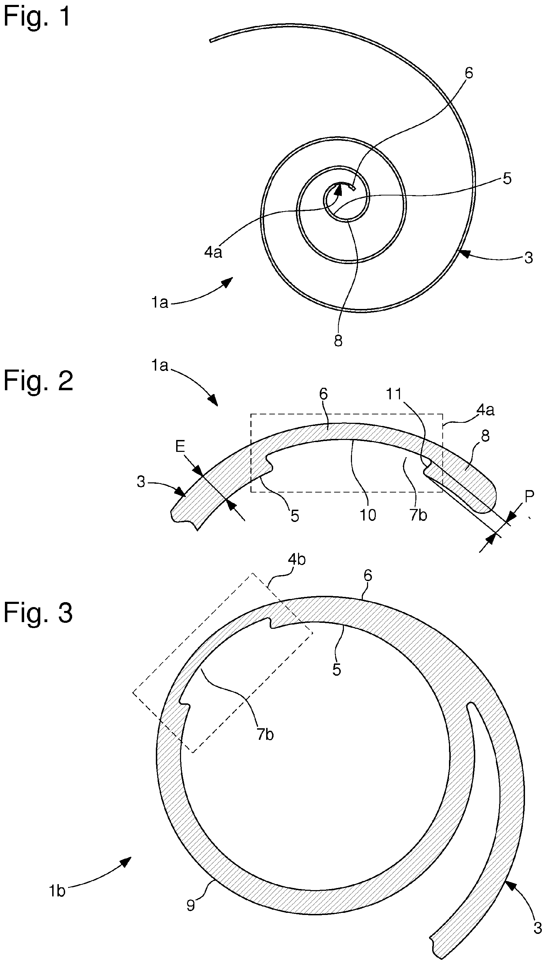

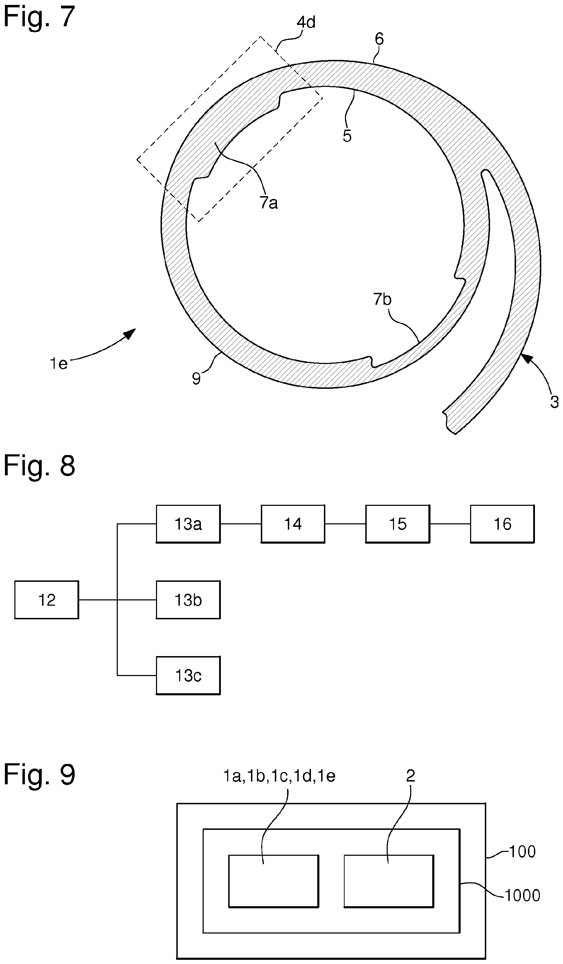

En référence aux figures 7 et 9, l'invention concerne un ressort de barillet 1e d'un mouvement horloger 1000 d'une pièce d'horlogerie 100 telle qu'une montre. On notera que les ressorts de barillet 1a, 1b, 1c, 1d, décrits aux figures 1 à 6 ne font pas partie de l'invention et constituent des exemples contribuant à mieux comprendre le contexte technique de cette invention.

Un tel ressort de barillet 1a, 1 b, 1c, 1d, 1e est apte à coopérer avec un arbre de barillet 2 du mouvement horloger 1000 en étant accroché à ce dernier au niveau de son extrémité interne 6. En effet, dans différents modes de réalisation de l'invention décrits par la suite, une première spire interne 8 ou un noyau fixe 9 de ce ressort de barillet 1a, 1b, 1c, 1d, 1e forme un coquillon qui a une forme essentiellement annulaire et qui est prévu pour être accroché à une zone de liaison définie sur une bonde de l'arbre de barillet 2.

Dans les premier au cinquième modes de réalisation de ce ressort de barillet 1a, 1b, 1c, 1d, 1e, visibles sur les figures 1 à 7, ce ressort 1a, 1b, 1c, 1d, 1e est une pièce monobloc qui comprend une lame métallique spiralée 3 autrement dit une lame 3 enroulée sur elle-même et une zone d'accrochage 4a, 4b, 4c, 4d, 4e. Cette lame 3 comporte une extrémité interne 6 dans laquelle est définie cette zone d'accrochage 4a, 4b, 4c, 4d, 4e. Une telle zone d'accrochage 4a, 4b, 4c, 4d, 4e est agencée sur une face intérieure 5 de cette extrémité interne 6 et comprend au moins un profil 7a et/ou au moins une cavité 7b.

Plus précisément, dans le premier mode de réalisation du ressort de barillet 1a visible sur les figures 1 et 2, l'extrémité interne 6 comprend une première spire interne 8 comportant ladite zone d'accrochage 4a pourvue d'une seule cavité 7b. Sur la figure 3 illustrant le deuxième mode de réalisation de ce ressort de barillet 1b, l'extrémité interne 6 comprend un noyau fixe 9 comportant ladite zone d'accrochage 4b pourvue également d'une seule cavité 7b. Dans ces deux modes de réalisation, la cavité 7b est venue de matière avec la lame 3. Cette cavité 7b comprend un fond 10 et des parois latérales 11, ces parois latérales 11 forment chacune avec ledit fond 10 un angle de préférence aigu. Dans cette configuration, la cavité 7b présente une profondeur P qui est sensiblement supérieure ou strictement supérieure à une moitié de l'épaisseur E de ladite lame 3. On notera en outre que le fond 10 de cette cavité 7b est venue de forme avec la lame 3.

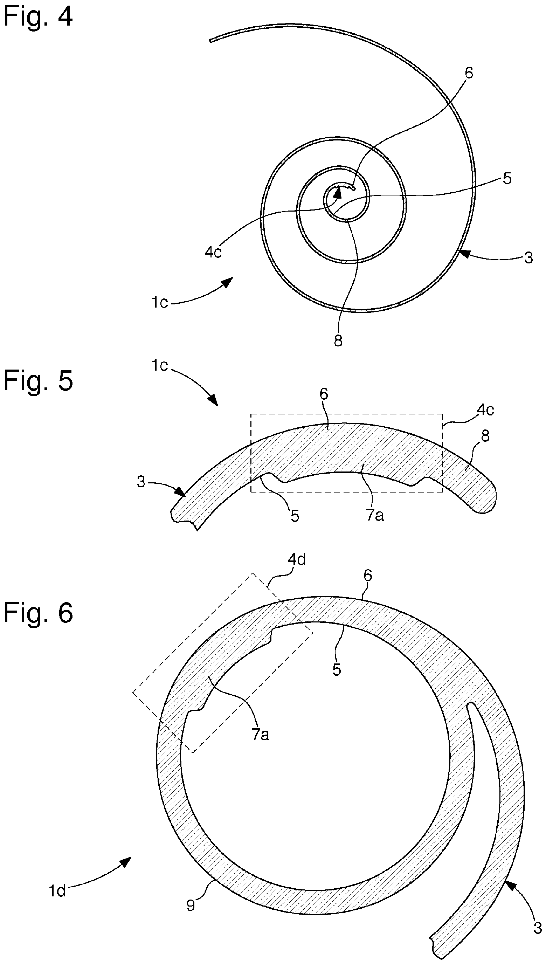

Dans le troisième mode de réalisation du ressort de barillet 1c visible sur les figures 4 et 5, l'extrémité interne 6 comprend une première spire interne 8 comportant ladite zone d'accrochage 4c pourvue d'un seul profil 7a. Dans le quatrième mode de réalisation de ce ressort de barillet 1d visible sur la figure 6, l'extrémité interne 6 comprend le noyau fixe 9 évoqué précédemment qui comporte ladite zone d'accrochage 4d pourvue également d'un seul profil 7a. Dans ces deux modes de réalisation, ce profil 7a est une surépaisseur qui est comprise sur une face intérieure 5 de l'extrémité interne 6 de la lame 3. Comme cela est visible sur les figures 4 à 7, ce profil 7a s'étend radialement selon une épaisseur sensiblement uniforme vers le centre de la première spire interne 8 ou du noyau fixe 9 selon le mode de réalisation correspondant.

Dans le cinquième mode de réalisation de ce ressort de barillet 1e illustré sur la figure 7, l'extrémité interne 6 du ressort de barillet 1e comprend un noyau fixe 9 pourvu d'une zone d'accrochage 4e comportant une cavité 7b et un profil 7a.

Dans les premier et troisième modes de réalisation, on notera que le profil 7a et la cavité 7b sont formés chacun juste à proximité de l'extrémité libre de la première spire interne 8. Dans cette configuration, l'extrémité libre de la première spire interne 8 comporte sensiblement la même section que le reste de cette première spire interne 8. Cette section présente une surface qui est supérieure à celle de cavité 7b et inférieure à la surface de la section du profil 7a.

Dans les deuxième, quatrième et cinquième modes de réalisation de ce ressort de barillet 1b, 1d, 1e, le noyau fixe 9 peut être une virole venue de matière avec la lame 3 et destinée à coopérer, par exemple, avec une bonde ou plus globalement un axe pivotant comme l'arbre de barillet 2.

Dans ces différents modes de réalisation du ressort de barillet 1a, 1b, 1c, 1d, 1e, la zone d'accrochage 4a, 4b, 4c, 4d, 4e peut comprendre une pluralité de cavités 7b ou de profils 7a, ou encore une combinaison de cavités 7b et de profils 7a. Les cavités 7b et/ou profils 7a de cette pluralité et de cette combinaison sont distribués sur la face intérieure 5 de l'extrémité interne 6 du ressort de barillet 1a, 1b, 1c, 1d, 1e et en particulier sur tout ou partie de cette face intérieure 5 définie dans la première spire interne 8 ou dans le noyau fixe 9 selon le mode de réalisation correspondant.

De plus, on comprend donc que les écueils qui peuvent être générés par les petites dimensions de la zone d'accrochage 4a, 4b, 4c, 4d, 4e pourvue d'au moins une cavité 7b et/ou d'au moins un profil 7a, sont écartées par la construction monobloc de ce ressort 1a, 1b, 1c, 1d, 1e. En complément, on notera que cette zone d'accrochage 4a, 4b, 4c, 4d, 4e est toujours parfaitement positionnée par rapport à la lame du ressort de barillet 1a, 1b, 1c, 1d, 1e. Une telle zone d'accrochage 4a, 4b, 4c, 4d, 4e est venue de matière avec la lame 3 et est destinée à coopérer, par exemple, avec la zone de liaison de la bonde de l'arbre de barillet 2. Cette architecture permet d'être très précis sur les dimensions de la zone d'accrochage 4a, 4b, 4c, 4d, 4e c'est-à-dire sur celles de la cavité 7b ou du profil 7a ainsi que sur son positionnement sur l'extrémité interne 6 de la lame 3.

Ainsi que nous l'avons déjà évoqué, l'arbre de barillet 2 du mouvement horloger 1000 comprend une bonde dont la paroi périphérique est pourvue de la zone de liaison. Cette zone de liaison qui a nécessairement une forme complémentaire à celle de la zone d'accrochage 4a, 4b, 4c, 4d, 4e est spécifiquement prévue pour coopérer avec une telle zone d'accrochage 4a, 4b, 4c, 4d, 4e du ressort de barillet 1a, 1b, 1c, 1d, 1e dans le cadre de la fixation/montage amovible du ressort de barillet 1a, 1b, 1c, 1d, 1e sur cet arbre de barillet 2. Effectivement, cette zone de liaison comprend également au moins un profil et/ou au moins une cavité susceptible de coopérer notamment par emboitement ou encore par clipage avec au moins une cavité 7b et/ou au moins un profil 7a du ressort de barillet 1a, 1b, 1c, 1d, 1e contribuant ainsi au maintien de ce ressort de barillet 1a, 1b, 1c, 1d, 1e sur cet arbre de barillet 2. A titre d'exemple le profil de la zone de liaison est apte à coopérer avec la cavité 7b de la zone d'accrochage 4a, 4b, 4c, 4d, 4e, cette cavité 7b ayant une forme complémentaire à celle de ce profil. De même, la cavité de la zone de liaison est apte à coopérer avec le profil 7a de la zone d'accrochage 4a, 4b, 4c, 4d, 4e, ce profil 7a ayant une forme complémentaire à celle de cette cavité.

En référence à la figure 8, l'invention porte aussi sur un procédé de fabrication de ce ressort de barillet 1a, 1b, 1c, 1d, 1e, comprenant une étape de réalisation 12 de la lame métallique spiralée 3 et de la zone d'accrochage 4a, 4b, 4c, 4d, 4e comportant au moins le profil 7a et/ou au moins la cavité 7b. Cette étape de réalisation 12 participe, notamment de manière sensiblement simultanée ou simultanée, à la formation de la lame 3 et de la zone d'accrochage 4a, 4b, 4c, 4d, 4e définie dans la face intérieure 5 de l'extrémité interne 6 de cette lame 3. Dans ce procédé, une telle étape de réalisation 12 du ressort de barillet 1a, 1b, 1c, 1d, 1e est dépourvue d'une phase de laminage et/ou d'une phase d'étampage.

Dans une première variante de ce procédé, cette étape de réalisation 12 comprend une sous-étape de formation 13a de la lame métallique spiralée 3 et de la zone d'accrochage 4a, 4b, 4c, 4d, 4e par électroformage. Lors de cette sous-étape 13a, les phases principales d'un électroformage consistent à former un moule puis à remplir ce moule à l'aide d'un matériau, par exemple, à l'aide d'une galvanoplastie. Ce type d'électroformage est connu sous l'abréviation « L.i.G.A ». provenant des termes allemands « Rôntgenlithographie, Galvanoformung, Abformung ». Plus précisément, cette sous-étape 13a comprend une phase initiale 14 consistant à se munir d'un substrat comportant une couche supérieure électriquement conductrice. Cette couche peut être obtenue par le dépôt d'un matériau électriquement conducteur sur un matériau isolant ou par le fait que le substrat est formé en un matériau électriquement conducteur. Par la suite cette sous-étape 13a comporte une phase de création 15 par photolithographie du moule comprenant au moins un niveau sur un substrat. Selon le type de processus du type L.I.G.A, le moule peut en effet comprendre un seul niveau en étant formé entièrement avant d'être rempli ou encore plusieurs niveaux avec chaque niveau du moule qui est alors formé et rempli avant de passer au niveau suivant. Bien entendu, tout type d'électroformage, du type L.I.G.A. ou non, capable de former un ressort de barillet 1a à 1e monobloc à au moins un niveau est envisageable. On notera que lors de cette phase de création 15 du moule, le seul niveau du moule est formé par exemple à partir d'une photolithographie d'une résine. En complément, il est formé dans ce moule au moins une cavité de forme correspondante au motif du futur ressort de barillet 1a, 1b, 1c, 1d, 1e c'est-à-dire avec sa zone d'accrochage 4a, 4b, 4c, 4d, 4e intégrée dans la face intérieure 5 de la première spirale ou du noyau fixe 9 selon les modes de réalisation correspondant du ressort 1a à 1e. Dans cette première variante, la sous-étape 13a du procédé prévoit ensuite une phase de remplissage 16 du niveau du moule par électrodéposition d'un matériau métallique. Lors de cette phase 16, ladite au moins une cavité de forme correspondante au motif du futur ressort de barillet 1a, 1b, 1c, 1d, 1e est alors remplie de ce matériau métallique. Par la suite, cette sous-étape 13a comprend une phase de libération 17 de la lame 3, pourvue de la zone d'accrochage 4a, 4b, 4c, 4d, 4e du moule, et du substrat afin de former le ressort de barillet 1a, 1b, 1c, 1d, 1e. Préférentiellement selon l'invention, le matériau métallique déposé est un alliage de nickel et de phosphore comme, typiquement, avec sensiblement 12% de phosphore (NiP12). En effet, il a été trouvé satisfaisant d'utiliser ce type d'alliage pour la fabrication d'un ressort de barillet en raison de son module élastique autour de 90GPa et de sa limite élastique autour de 1700 MPa.

Dans une deuxième variante de ce procédé, l'étape de réalisation 12 comprend une sous-étape de formation 13b de la lame métallique spiralée 3 et de la zone d'accrochage 4a, 4b, 4c, 4d, 4e par évidemment dans un substrat métallique en forme de plaque. Dans ce contexte l'évidement est réalisé à partir de techniques de photolithographie et/ou de gravure/découpage par attaque chimique et/ou de découpage par laser. En complément des techniques de gravure de type DRIE (acronyme de « Deep Reactive Ion Etching ») peuvent aussi être utilisées lors de cette sous-étape 13b notamment lorsque la lame métallique en formation est réalisée en un matériau tel que le silicium ou certaines céramiques. Lors de cette sous-étape 13b, la lame 3 et la zone d'accrochage 4a, 4b, 4c, 4d, 4e sont formées par découpe à partir d'un substrat métallique commun. Le substrat évidé peut être réalisé en un seul matériau, par exemple en silicium ou dans n'importe quel matériau déformable dans l'espace et que l'homme du métier juge approprié pour cette application de ressort de barillet. Par exemple le substrat peut être réalisé en oxyde de silicium, en quartz, en un des leurs composés, en microcristaux, et/ou en une combinaison de ces matériaux. Dans une alternative le substrat comprend deux ou plusieurs couches de matériaux différents. Dans une autre alternative, le substrat est creux. De manière préférentielle, on notera que le substrat est de préférence plan. Dans une alternative, le substrat commun peut être extrudé afin de créer des topologies tridimensionnelles. Dans une autre variante, le ressort de barillet 1a, 1b, 1c, 1d, 1e est formé à partir d'un substrat multicouche, avec des couches formées dans plusieurs matériaux ou dans un même matériau.

Dans une troisième variante de ce procédé, l'étape de réalisation 12 comprend une sous-étape de formation 13c de la lame métallique spiralée 3 et de la zone d'accrochage 4a, 4b, 4c, 4d, 4e par une technique de fabrication additive métallique. Cette technique de fabrication additive métallique met par exemple en oeuvre des technologies connues de l'état de la technique que nous ne décrirons donc pas ici dans le détail, comme par exemple :
- la fusion/frittage laser sur lit de poudre, ou en anglais, Selective Laser Melting/Sintering (SLM/SLS) ;
- la fusion/frittage laser par projection de poudre, ou en anglais, Laser Metal Déposition (LMD), ou
- la fusion par faisceau d'électrons, ou en anglais, Electron Beam Melting (EBM).

On comprend donc qu'un tel procédé de fabrication dans ces différentes variantes, ne prévoit pas d'étapes séparées de formation de la lame 3 constituant le ressort de barillet 1a, 1b, 1c, 1d, 1e et de la cavité 7b et/ou du profil 7a de la zone d'accrochage 4a, 4b, 4c, 4d, 4e de ce ressort 1a à 1e. En effet, la cavité 7b et/ou le profil 7a sont directement formés sensiblement en même temps ou en même temps que la lame 3 du ressort de barillet 1a à 1e. Suivant les modes de réalisation voulus, cet avantage est évidemment valable pour le noyau fixe 9 comprenant la zone d'accrochage 4a, 4b, 4c, 4d, 4e. Dans ce contexte, la cavité 7b et/ou le profil 7a de la zone d'accrochage 4a, 4b, 4c, 4d, 4e sont structurellement toujours parfaitement positionnés par rapport à la lame 3.

## Revendications

1. Procédé de fabrication d'un ressort de barillet (1a, 1b, 1c, 1d, 1e) pour un mouvement horloger (1000) d'une pièce d'horlogerie (100), ledit ressort de barillet (1a, 1b, 1c, 1d, 1e) comprenant une extrémité interne (6) comportant une première spire interne (8) ou un noyau fixe (9) définissant une zone d'accrochage (4a, 4b, 4c, 4d, 4e) à une zone de liaison définie sur une bonde de l'arbre de barillet (2), ce ressort de barillet (1a, 1b, 1c, 1d, 1e) comprenant une lame métallique spiralée (3), le procédé comprenant une étape de réalisation (12) d'une lame métallique spiralée (3) et de ladite zone d'accrochage (4a, 4b, 4c, 4d, 4e) sur une face intérieure (5) de l'extrémité interne (6) de ladite lame (3), la zone d'accrochage (4a, 4b, 4c, 4d, 4e) comprenant au moins un profil (7a) et au moins une cavité (7b) compris dans ladite face intérieure (5) de cette extrémité interne (6), ladite au moins une cavité (7b) comprenant un fond (10) et des parois latérales (11), lesdites parois latérales (11) formant chacune avec ledit fond (10) un angle aigu et ladite au moins une cavité (7b) présentant une profondeur (P) qui est sensiblement supérieure ou strictement supérieure à une moitié de l'épaisseur (E) de la lame (3), ladite au moins une cavité (7b) ayant une forme complémentaire à celle dudit au moins un profil de la zone de liaison de l'arbre de barillet (2) et coopérant avec ledit au moins un profil de cette zone de liaison, et ledit au moins un profil (7a) étant une surépaisseur qui est comprise sur la face intérieure (5) de l'extrémité interne (6) de la lame (3), ledit au moins un profil (7a) ayant une forme complémentaire à celle de ladite au moins une cavité de la zone de liaison de l'arbre de barillet (2) du mouvement horloger (1000) et coopérant avec ladite au moins une cavité de cette zone de liaison, ladite étape de réalisation (12) comprenant :
- une sous-étape de formation (13a) de la lame métallique spiralée (3) et de la zone d'accrochage (4a, 4b, 4c, 4d, 4e) par électroformage, ou
- une sous-étape de formation (13b) de la lame métallique spiralée (3) et de la zone d'accrochage (4a, 4b, 4c, 4d, 4e) par évidemment dans un substrat métallique en forme de plaque, ou
- une sous-étape de formation (13c) de la lame métallique spiralée (3) et de la zone d'accrochage (4a, 4b, 4c, 4d, 4e) par une technique de fabrication additive métallique.

2. Procédé selon la revendication précédente, **caractérisé en ce que** ladite sous-étape de formation (13a) comprend :
- une phase de création (15) par photolithographie d'un moule comprenant au moins un niveau sur un substrat ;
- une phase de remplissage (16) dudit au moins un niveau du moule par électrodéposition d'un matériau métallique, et
- une phase de libération (17) de la lame (3) du moule comprenant la zone d'accrochage (4a, 4b, 4c, 4d, 4e) et du substrat afin de former le ressort de barillet (1a, 1b, 1c, 1d, 1e).

3. Procédé selon la revendication 1, **caractérisé en ce que** dans la sous-étape de formation (13b) l'évidement est réalisé à partir de techniques de photolithographie et/ou de gravure/découpage par attaque chimique et/ou de découpage par laser et/ou de gravure DRIE.

4. Ressort de barillet (1a, 1b, 1c, 1d, 1e) pour un mouvement horloger (1000) d'une pièce d'horlogerie (100) susceptible d'être obtenu par le procédé selon l'une quelconque des revendications précédentes, ledit ressort de barillet (1a, 1b, 1c, 1d, 1e) comprenant une extrémité interne (6) comportant une première spire interne (8) ou un noyau fixe (9) définissant une zone d'accrochage (4a, 4b, 4c, 4d, 4e) à une zone de liaison définie sur une bonde de l'arbre de barillet (2), ce ressort de barillet (1a, 1b, 1c, 1d, 1e) comprenant une lame métallique spiralée (3) et ladite zone d'accrochage (4a, 4b, 4c, 4d, 4e) définie dans une face intérieure (5) de l'extrémité interne (6) de ladite lame (3), la zone d'accrochage (4a, 4b, 4c, 4d, 4e) comportant au moins un profil (7a) et au moins une cavité (7b) compris dans ladite face intérieure (5) de cette extrémité interne (6), ladite au moins une cavité (7b) comprenant un fond (10) et des parois latérales (11), lesdites parois latérales (11) formant chacune avec ledit fond (10) un angle aigu et ladite au moins une cavité (7b) présentant une profondeur (P) qui est sensiblement supérieure ou strictement supérieure à une moitié de l'épaisseur (E) de la lame (3), ladite au moins une cavité (7b) ayant une forme complémentaire à celle dudit au moins un profil de la zone de liaison de l'arbre de barillet (2) et coopérant avec ledit au moins un profil de cette zone de liaison, et ledit au moins un profil (7a) étant une surépaisseur qui est comprise sur la face intérieure (5) de l'extrémité interne (6) de la lame (3), ledit au moins un profil (7a) ayant une forme complémentaire à celle de ladite au moins une cavité de la zone de liaison de l'arbre de barillet (2) du mouvement horloger (1000) et coopérant avec ladite au moins une cavité de cette zone de liaison.

5. Mouvement horloger (1000) d'une pièce d'horlogerie (100) comportant un ressort de barillet (1a, 1b, 1c, 1d) selon la revendication précédente.

6. Mouvement horloger (1000) selon la revendication précédente, **caractérisé en ce qu'**il comprend un arbre de barillet (2) pourvu d'une paroi périphérique comportant la zone de liaison comprenant ledit au moins un profil et ladite au moins une cavité susceptible de coopérer respectivement avec ladite au moins une cavité (7b) et ledit au moins un profil (7a) de la zone d'accrochage (4a, 4b, 4c, 4d, 4e) du ressort de barillet (1a, 1b, 1c, 1d) contribuant au maintien de ce ressort de barillet (1a, 1b, 1c, 1d) sur cet arbre de barillet (2).

7. Pièce d'horlogerie (100) comprenant un mouvement horloger (1000) selon l'une quelconque des revendications 5 et 6.

## Patentansprüche

1. Verfahren zum Herstellen einer Zugfeder (1a, 1b, 1c, 1d, 1e) für ein Uhrwerk (1000) einer Uhr (100), wobei die Zugfeder (1a, 1b, 1c, 1d, 1e) ein inneres Ende (6) umfasst, das eine erste innere Windung (8) oder einen festen Kern (9) enthält und einen Bereich zum Anhängen (4a, 4b, 4c, 4d, 4e) in einen Verbindungsbereich definiert, der auf einem Federkern der Federwelle (2) definiert ist, wobei die Zugfeder (1a, 1b, 1c, 1d, 1e) eine spiralförmige Metallklinge (3) umfasst, wobei das Verfahren einen Schritt des Bereitstellens (12) einer spiralförmigen Metallklinge (3) und eines Anhängbereichs (4a, 4b, 4c, 4d, 4e) an einer Innenfläche (5) eines inneren Endes (6) der Klinge (3), wobei der Anhängbereich (4a, 4b, 4c, 4d, 4e) mindestens ein Profil (7a) und mindestens einen Hohlraum (7b) umfasst, die in der Innenfläche (5) des inneren Endes (6) enthalten sind, wobei der mindestens eine Hohlraum (7b) einen Boden (10) und Seitenwände (11) umfasst, wobei die Seitenwände (11) jeweils mit dem Boden (10) einen spitzen Winkel bilden und der mindestens eine Hohlraum (7b) eine Tiefe (P) aufweist, die im Wesentlichen größer oder strikt größer als eine Hälfte der Dicke (E) der Klinge (3) ist, wobei der mindestens eine Hohlraum (7b) eine Form aufweist, die komplementär zu der des mindestens einen Profils des Verbindungsbereichs der Federwelle (2) ist und mit dem mindestens einen Profil des Verbindungsbereichs zusammenwirkt, und wobei das mindestens eine Profil (7a) eine Überdicke hat, die auf der Innenfläche (5) des inneren Endes (6) der Klinge (3) enthalten ist, wobei das mindestens eine Profil (7a) eine Form aufweist, die komplementär zu der des mindestens einen Hohlraums des Verbindungsbereichs der Federwelle (2) des Uhrwerks (1000) ist und mit dem mindestens einen Hohlraum des Verbindungsbereichs zusammenwirkt, wobei der Schritt des Bereitstellens (12) Folgendes umfasst:
- einen Unterschritt des Bildens (13a) der spiralförmigen Metallklinge (3) und des Anhängbereichs (4a, 4b, 4c, 4d, 4e) durch Elektroformung, oder
- einen Unterschritt des Bildens (13b) der spiralförmigen Metallklinge (3) und des Anhängbereichs (4a, 4b, 4c, 4d, 4e) durch Aussparung in einem plattenförmigen Metallsubstrat, oder
- einen Unterschritt des Bildens (13c) der spiralförmigen Metallklinge (3) und des Anhängbereichs (4a, 4b, 4c, 4d, 4e) durch ein additives Metallherstellungsverfahren.

2. Verfahren nach dem vorhergehenden Anspruch, **dadurch gekennzeichnet, dass** der Unterschritt des Bildens (13a) Folgendes umfasst:
- eine Phase des Erzeugens (15) einer Gießform, die mindestens eine Ebene auf einem Substrat umfasst, durch Fotolithografie;
- eine Phase des Auffüllens (16) der mindestens einen Ebene der Gießform durch Galvanisieren eines metallischen Materials; und
- eine Phase des Freigebens (17) der Klinge (3) aus der Gießform, umfassend den Anhängbereich (4a, 4b, 4c, 4d, 4e) und das Substrat, um die Zugfeder (1a, 1b, 1c, 1d, 1e) zu bilden.

3. Verfahren nach Anspruch 1, **dadurch gekennzeichnet, dass** in dem Unterschritt des Bildens (13b) die Aushöhlung durch Fotolithografie und/oder Ätzen/Schneiden durch chemisches Ätzen und/oder Laserschneiden und/oder reaktives Ionentiefenätzen erzeugt wird.

4. Zugfeder (1a, 1b, 1c, 1d, 1e) für ein Uhrwerk (1000) einer Uhr (100), die geeignet ist, durch das Verfahren nach einem der vorhergehenden Ansprüche erhalten zu werden, wobei die Zugfeder (1a, 1b, 1c, 1d, 1e) ein inneres Ende (6) umfasst, das eine erste innere Windung (8) oder einen festen Kern (9) enthält, der einen Bereich zum Anhängen (4a, 4b, 4c, 4d, 4e) in einen Verbindungsbereich definiert, der auf einem Federkern der Federwelle (2) definiert ist, wobei die Zugfeder (1a, 1b, 1c, 1d, 1e) eine spiralförmige Metallklinge (3) und den Anhängbereich (4a, 4b, 4c, 4d, 4e) umfasst, der in einer Innenfläche (5) des inneren Endes (6) der Klinge (3) definiert ist, wobei der Anhängbereich (4a, 4b, 4c, 4d, 4e) mindestens ein Profil (7a) und mindestens einen Hohlraum (7b) enthält, die in der Innenfläche (5) des inneren Endes (6) enthalten sind, wobei der mindestens eine Hohlraum (7b) einen Boden (10) und Seitenwände (11) umfasst, wobei die Seitenwände (11) jeweils mit dem Boden (10) einen spitzen Winkel bilden und der mindestens eine Hohlraum (7b) eine Tiefe (P) aufweist, die im Wesentlichen größer oder strikt größer als eine Hälfte der Dicke (E) der Klinge (3) ist, wobei der mindestens eine Hohlraum (7b) eine Form aufweist, die komplementär zu der des mindestens einen Profils des Verbindungsbereichs der Federwelle (2) ist und mit dem mindestens einen Profil des Verbindungsbereichs zusammenwirkt, und wobei das mindestens eine Profil (7a) eine Überdicke ist, die auf der Innenfläche (5) des inneren Endes (6) der Klinge (3) enthalten ist, wobei das mindestens eine Profil (7a) eine Form aufweist, die komplementär zu der des mindestens einen Hohlraums des Verbindungsbereichs der Federwelle (2) des Uhrwerks (1000) ist und mit dem mindestens einen Hohlraum des Verbindungsbereichs zusammenwirkt.

5. Uhrwerk (1000) einer Uhr (100), das eine Zugfeder (1a, 1b, 1c, 1d) nach dem vorhergehenden Anspruch umfasst.

6. Uhrwerk (1000) nach dem vorhergehenden Anspruch, **dadurch gekennzeichnet, dass** es eine Federwelle (2) umfasst, die mit einer Umfangswand versehen ist, die den Verbindungsbereich enthält, der das mindestens eine Profil und den mindestens einen Hohlraum umfasst, die dazu geeignet sind, jeweils mit dem mindestens einen Hohlraum (7b) und dem mindestens einen Profil (7a) des Anhängbereichs (4a, 4b, 4c, 4d, 4e) der Zugfeder (1a, 1b, 1c, 1d) zusammenzuwirken, und beim Halten der Zugfeder (1a, 1b, 1c, 1d) auf der Federwelle (2) mitwirken.

7. Uhr (100), die ein Uhrwerk (1000) nach einem der Ansprüche 5 und 6 umfasst.

## Claims

1. Method for manufacturing a mainspring (1a, 1b, 1c, 1d, 1e) for a movement (1000) of a timepiece (100), said mainspring (1a, 1b, 1c, 1d, 1e) including an inner end (6) having a first inner coil (8) or a fixed core (9) defining a hooking area (4a, 4b, 4c, 4d, 4e) for hooking to a defined connecting area on a core of the barrel arbor (2), this mainspring (1a, 1b, 1c, 1d, 1e) including a spiral metal strip (3), the method including a step (12) of producing a spiral metal strip (3) and said hooking area (4a, 4b, 4c, 4d, 4e) on an inner face (5) of the inner end (6) of said strip (3), the hooking area (4a, 4b, 4c, 4d, 4e) including at least one shaped portion (7a) and at least one cavity (7b) comprised in said inner face (5) of this inner end (6), said at least one cavity (7b) comprising a base (10) and side walls (11), said side walls (11) each forming an acute angle with said base (10), and said at least one cavity (7b) having a depth (P) that is substantially greater or strictly greater than half the thickness (E) of the strip (3), said at least one cavity (7b) having a shape that complements that of said at least one shaped portion of the connecting area of the barrel arbor (2) and cooperating with said at least one shaped portion of this connecting area, and said at least one shaped portion (7a) being a portion of increased thickness comprised on the inner face (5) of the inner end (6) of the strip (3), said at least one shaped portion (7a) having a shape that complements that of said at least one cavity of the connecting area of the barrel arbor (2) of the timepiece movement (1000) and cooperating with said at least one cavity of this connecting area, said production step (12) comprising:
- a sub-step (13a) of forming the spiral metal strip (3) and the hooking area (4a, 4b, 4c, 4d, 4e) by electroforming, or
- a sub-step (13b) of forming the spiral metal strip (3) and the hooking area (4a, 4b, 4c, 4d, 4e) by material removal from a metal substrate in the form of a wafer, or
- a sub-step (13c) of forming the spiral metal strip (3) and the hooking area (4a, 4b, 4c, 4d, 4e) by a metal additive manufacturing technique.

2. Method according to the preceding claim, **characterised in that** said forming sub-step (13a) comprises:
- a phase (15) of creating, by photolithography, a mould including at least one level on a substrate;
- a phase (16) of filling said at least one level of the mould by electrodeposition of a metal material, and
- a phase (17) of releasing the strip (3) from the mould including the hooking area (4a, 4b, 4c, 4d, 4e) and from the substrate to form the mainspring (1a, 1b, 1c, 1d, 1e).

3. Method according to claim 1, **characterised in that** in the forming sub-step (13b), the material removal is achieved by techniques of photolithography and/or engraving/chemical etching and/or laser cutting and/or DRIE etching.

4. Mainspring (1a, 1b, 1c, 1d, 1e) for a movement (1000) of a timepiece (100) and capable of being obtained by the method according to any one of the preceding claims, said mainspring (1a, 1b, 1c, 1d, 1e) comprising an inner end (6) having a first inner coil (8) or a fixed core (9) defining a hooking area (4a, 4b, 4c, 4d, 4e) for hooking to a defined connecting area on a core of the barrel arbor (2), this mainspring (1a, 1b, 1c, 1d, 1e) including a spiral metal strip (3) and said hooking area (4a, 4b, 4c, 4d, 4e) defined on an inner face (5) of the inner end (6) of said strip (3), the hooking area (4a, 4b, 4c, 4d, 4e) including at least one shaped portion (7a) and at least one cavity (7b) comprised in said inner face (5) of this inner end (6), said at least one cavity (7b) comprising a base (10) and side walls (11), said side walls (11) each forming an acute angle with said base (10), and said at least one cavity (7b) having a depth (P) that is substantially greater or strictly greater than half the thickness (E) of the strip (3), said at least one cavity (7b) having a shape that complements that of said at least one shaped portion of the connecting area of the barrel arbor (2) and cooperating with said at least one shaped portion of this connecting area, and said at least one shaped portion (7a) being a portion of increased thickness comprised on the inner face (5) of the inner end (6) of the strip (3), said at least one shaped portion (7a) having a shape that complements that of said at least one cavity of the connecting area of the barrel arbor (2) of the timepiece movement (1000) and cooperating with said at least one cavity of this connecting area.

5. Timepiece movement (1000) for a timepiece (100) including a mainspring (1a, 1b, 1c, 1d) according to the preceding claim.

6. Timepiece movement (1000) according to the preceding claim, **characterised in that** the movement includes a barrel arbor (2) provided with a peripheral wall including the connecting area including said at least one shaped portion and said at least one cavity able to cooperate respectively with said at least one cavity (7b) and said at least one shaped portion (7a) of the hooking area (4a, 4b, 4c, 4d, 4e) of the mainspring (1a, 1b, 1c, 1d) assisting in holding said mainspring (1a, 1b, 1c, 1d) on said barrel arbor (2).

7. Timepiece (100) comprising a timepiece movement (1000) according to any one of claims 5 and 6.
